# EUROPÄISCHE PATENTANMELDUNG

(11) **EP 1 714 923 A2**
(43) Veröffentlichungstag der Anmeldung: **25.10.2006**
(21) Anmeldenummer: 06006984.6
(22) Anmeldetag: 31.03.2006
(51) Int. Cl.: B65G 54/02

(54) **Werkstücktransportvorrichtung mit zumindest einer endlos umlaufenden Kette für eine Holzbearbeitungsmaschine**

(30) Priorität: 23.04.2005 DE 102005019036
(71) Anmelder: IMA Klessmann GmbH Holzbearbeitungssysteme, 32312 Lübbecke (DE)
(72) Erfinder: Reichling, Hans-Ulrich, 32312 Lübbecke (DE); Hampel, Thomas, 32312 Lübbecke (DE)
(74) Vertreter: Elbertzhagen, Otto

(57) **Zusammenfassung**

Bei einer solchen Transportvorrichtung, die für eine schnellaufende Holzbearbeitungsmaschine bestimmt ist, weist die Kette (1) Kettenglieder (5) mit Laufrollen (6) auf, und es sind an der Kettenumlaufbahn Führungsvorrichtungen (7) vorgesehen, zu denen eine das Obertrum (3) der Ketten (1) unterstützende Laufschiene (8) für die Laufrollen (6) der Kettenglieder (5) gehört. Um die Kette (1) möglichst schwingungsfrei anzutreiben, ist ein Linearantrieb entsprechend einem elektromagnetischen Linearmotor vorgesehen, wozu an der Kettenumlaufbahn und an den Kettengliedern (5) die relativ zueinander beweglichen Primärteile (9) und Sekundärteile (10) des Linearantriebs angeordnet sind.

## Beschreibung

Die Erfindung bezieht sich auf eine Werkstücktransportvorrichtung gemäß den Merkmalen des Oberbegriffs des Patentanspruchs 1.

Bei bekannten Werkstücktransportvorrichtungen dieser Art erfolgt der Antrieb der endlos umlaufenden Kette über ein Antriebskettenrad, auf welches das Obertrum der Kette zuläuft und das an einem der beiden Enden der Werkstücktransportvorrichtung die Kette umlenkt. Das Antriebskettenrad hat entlang seinem Umfang mit der Kette in Eingriff kommende Mitnahmeglieder, deren Verbindungslinie polygonförmig verläuft. Dementsprechend umschlingt die Kette das Antriebskettenrad ebenfalls polygonförmig und werden die auf das Antriebskettenrad auflaufenden Kettenglieder aus der geradlinigen, gestreckten Lage der Kette heraus um den Eckwinkel des Polygons relativ zueinander abgewinkelt. Entsprechend verlagert sich der Kraftangriffspunkt an jedem auf das Antriebskettenrad auflaufenden Kettenglied aus der geradlinigen Bewegungsrichtung des Ketten-Obertrums heraus, wodurch schwellende Zugkräfte auf die Kette übertragen werden. Dies führt zu Schwin-gungen in der Kette, die sich bei den rollengelagerten Kettengliedern über einen weiten Bereich der Ober- und Untertrume der Kette fortsetzen. Damit ist ein Verschleiß der Werkstücktransportkette und ihrer Führungsvorrichtungen verbunden, der umso höher ist, je schneller die Vorschubgeschwindigkeit der Kette ist.

In anderer Ausführung hat man bei Werkstücktransportvorrichtungen der in Rede stehenden Art für den Antrieb der Kette einen Antriebsstock vorgesehen, der im Bereich einer der Kettentrume angeordnet wird. Im Antriebsstock läuft die Kette ebenfalls über zumindest ein Antriebskettenrad, auch hier werden auf die Kette pulsierende Vorschubkräfte übertragen. Der Antriebsstock ist ein zusätzliches Bauteil, welches schwieriger in die Gesamtvorrichtung zu integrieren ist als ein eines der Umlenkkettenräder antreibender Motor.

Gemäß dem Dokument EP 1 479 944 A2 ist man den bei den Werkstücktransportketten auftretenden Schwingungen und Vibrationen damit begegnet, auf die Kette eine magnetische Kraft auszuüben. Damit soll die Kette gegen die üblicherweise vorhandene Führungseinrichtung angezogen werden, um zu verhindern, daß ein Schlingern der Kette oder ein Prellen der Laufrollen an den Kettengliedern auf der Laufschiene auftritt.

Die Erfindung geht einen anderen Weg, indem ein Antriebskettenrad, welches den geschilderten Polygoneffekt hervorruft, von vornherein entfällt. So liegt der Erfindung die Aufgabe zugrunde, eine Werkstücktransportvorrichtung der eingangs genannten Art zu schaffen, mit der ein schwingungsfreier, zumindest jedoch schwingungsarmer Umlauf der Kette erzielt wird.

Diese Aufgabe wird bei einer Werkstücktransportvorrichtung der vorgenannten Art durch die kennzeichnenden Merkmale des Patentanspruchs 1 gelöst.

Für die Erfindung ist wesentlich, daß der Umlauf- bzw. Vorschubantrieb der Kette in Gestalt des elektromagnetischen Linearmotors ruckfrei arbeitet, also gleichmäßige Kräfte ohne Lastspitzen auf die Kette überträgt. Hierdurch bedingte Schwingungen oder Vibrationen sowohl in Längsrichtung der Kette als auch quer dazu können deshalb nicht auftreten. Bei einer Holzbearbeitungsmaschine, welche die Werkstücke im schnellen Durchlauf spannehmend bearbeitet, wird hierdurch nicht nur der Verschleiß an der Kette und der Kettenlaufbahn vermindert, es wird auch die Bearbeitungsgüte gesteigert.

Vorteilhafte Ausgestaltungsmerkmale der Erfindung ergeben sich aus den Unteransprüchen.

Die Erfindung wird nachfolgend anhand der Zeichnung an Ausführungsbeispielen noch näher erläutert. Dabei zeigen:
- Fig.1: eine schematische Seitansicht einer Werkstücktransportvorrichtung mit endlos umlaufender Kette,
- Fig. 2: einen schematischen Querschnitt durch das Obertrum der Kette der Werkstücktransportvorrichtung in erster Ausführung,
- Fig. 3: einen der Figur 2 entsprechenden Querschnitt in zweiter Ausführung der Werkstücktransport vorrichtung und
- Fig. 4: einen der Figur 2 entsprechenden Querschnitt in einer weiteren Ausführungsform der Werkstücktransportvorrichtung.

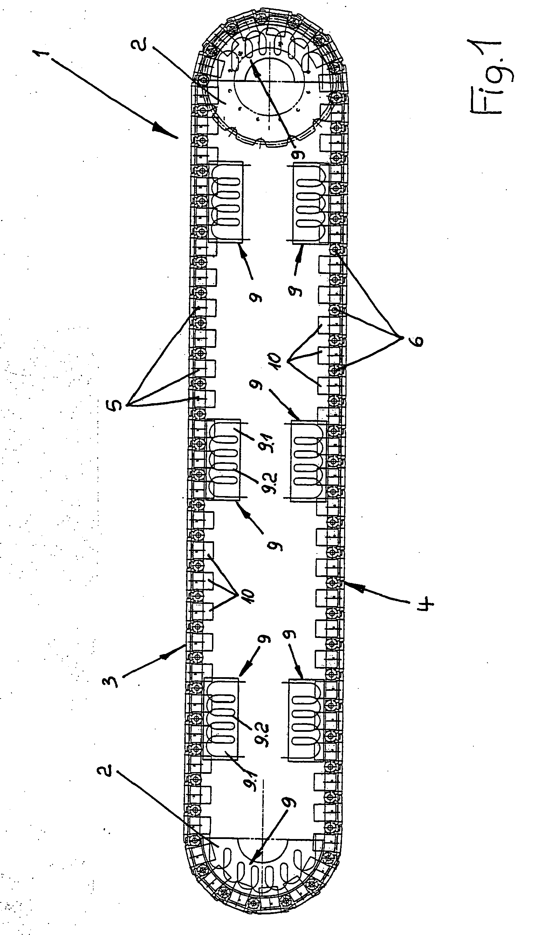

In Figur 1 ist von der Werkstücktransportvorrichtung im wesent-lichen nur die Werkstücktransportkette 1 wiedergegeben. Die weiteren Bauteile der Werkstücktransportvorrichtung, wie insbesondere das zugehörige Traggestell, sind weggelassen. Bei der Kette 1 handelt es sich um eine über zwei einander gegenüberliegende Umlenkvorrichtungen 2 endlos umlaufende Kette, deren Obertrum 3 und Untertrum 4 bevorzugt parallel zueinander verlaufen. Die Kette 1 ist insgesamt in der Betriebslage in einer vertikalen Ebene angeordnet. Bei den Umlenkvorrichtungen 2 handelt es sich um gekrümmte Kufen zur Führung der Kette 1 in den beiden Umlenkbereichen, statt dessen können auch Kettenräder vorgesehen werden, die nicht angetrieben sind. Insgesamt hat die Umlauf-bahn für die Kette 1 die Gestalt eines Stadionovals ohne weitere Umlenkstellen, wie es für den Werkstücktransport bei in schnellem Durchlauf arbeitenden Holzbearbeitungsmaschinen am vorteilhaftesten ist.

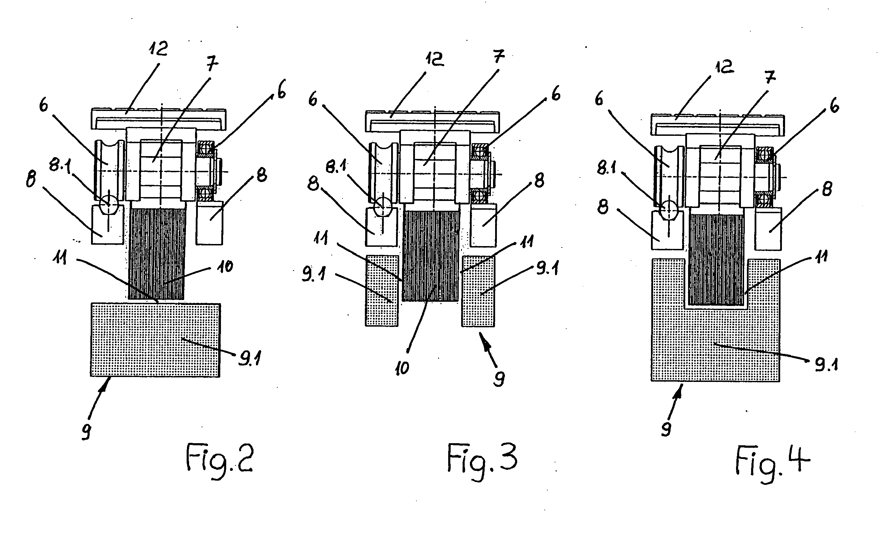

Die Kette 1 setzt sich aus einer Vielzahl von gelenkig miteinander verbundenen Kettengliedern 5 zusammen. An den Kettengliedern 5 sind Laufrollen 6 vorgesehen, die sich jeweils an der Gelenkstelle zwischen zwei benachbarten Kettengliedern 5 befinden können. Die Figuren 2 bis 4 zeigen weitere Einzelheiten der Kettenglieder 5. Oberseitig auf einem Gestell 7 ist eine Tragplatte 12 angeordnet, die beim Durchlaufen des Obertrums 3 der Kette 1 nach oben hin freiliegt. Auf diese Tragplatte 12 werden die auf dem Obertrum 3 der Kette 1 zu transportierenden Werkstücke aufgelegt und auf der die Werkstücke erforderlichenfalls gespannt werden können. Die Laufrollen 6 sind unterschiedlich ausgeführt, so weisen die in den Figuren 2 bis 4 jeweils links dargestellten Laufrollen 6 an ihrem Umfang ein Spurprofil auf, um die Kette 1 in ihrer Längsrichtung sicher zu führen. Zumindest im Bereich des Obertrums 3 der Kette 1 laufen die Laufrollen 6 auf Laufschienen 8, wobei die der Laufrolle 6 mit dem Spurprofil zugeordnete Laufschiene 8 ein entsprechendes Gegenprofil 8.1 aufweist. Die Laufschienen 8 sind Teil von Führungsvorrichtungen 7, die entlang der gesamten Kettenumlaufbahn angeordnet sein können.

Für den Vorschub- bzw. Umlaufantrieb der Kette 1 sind Antriebseinheiten vorgesehen, die als Linearantriebe mit entsprechenden elektromagnetischen Linearmotoren ausgeführt sind. Zur Erzeugung eines magnetischen Wanderfeldes dienen sogenannte Primärteile 9 mit je einem aus ferromagnetischem Material bestehenden Joch 9.1 und elektrischen Spulen 9.2, die schematisch in Figur 1 angedeutet sind. Die Primärteile 9 stellen den feststehenden Stator des jeweiligen Linearmotors dar, dementsprechend sind die Primärteile 9 an dem nicht in der Zeichnung wiedergegebenen Maschinengestell feststehend angeordnet. Die Primärteile 9 wirken mit beweglichen Sekundärteilen 10 zusammen, die an den von der Tragplatte 12 abgewandten Seiten der Kettenglieder 5 angeordnet sind. Die auf die Sekundärteile 10 ausgeübten magnetischen Vorschubkräfte übertragen sich auf die Kettenglieder 5 und damit auf die gesamte Kette 1. Anders als in Figur 1 dargestellt können die einzelnen Primärteile 9 des Linearantriebs auch lückenlos aneinander anschließen und je nach Länge der Kette 1 zu einem einzigen Primärteil miteinander vereint sein. Nicht nur in dieser Anordnung, sondern auch in der voneinander beabstandeten Anordnung können Primärteile 9 im Bereich der Umlenkvorrichtungen 2 vorgesehen sein, wobei diese Primärteile 9 vor allem mit ihren Jochen der Krümmung der Kettenumlaufbahn im Bereich der Umlenkvorrichtungen 2 folgen. Im Bereich der geradlinig sich erstreckenden Trume 3, 4 der Kette 1 kommt man mit Jochen 9.1 der Primärteile 9 aus, die sich in geradliniger, ebener Ausrichtung erstrecken.

Um die Sekundärteile 10 des Linearantriebs an den Kettengliedern 5 nicht bestromen zu müssen, was grundsätzlich mittels geeigneter Übertragungseinrichtungen möglich ist, sieht man hier Permanentmagnete als Sekundärteile 10 vor. Zu der vertikalen Längsmittenebene durch die Kettenglieder 5 hindurch sind die als Permanentmagnete ausgeführten Sekundärteile 10 spiegelsymmetrisch angeordnet, um auf die Kettenglieder 5 wirkende Kippmomente zu unterbinden. Denn neben den Vorschubkräften, welches das von den feststehenden Primärteilen 9 generierte magnetische Wanderfeld auf die mit den Kettengliedern 5 beweglichen Sekundärteile 10 ausübt, wirken im Luftspalt zwischen den Primärteilen 9 und den Sekundärteilen 10 erhebliche Anziehungskräfte, denen Rechnung getragen werden muß.

Figur 3 zeigt eine einfachere Lösung für die Anordnung des Primärteils 9 und des Sekundärteils 10 des Linearantriebs. Dem im Querschnitt rechteckigen Permamentmagneten als Sekundärteil 10 liegt an seiner unteren Schmalflächenseite über den Luftspalt 11 hinweg das Joch 9.1 des Primärteils 9 des Linearantriebs gegenüber. Da hier magnetische Zugkräfte auf das Kettenglied 5 übertragen werden, sind Bauformen zu bevorzugen, wie sie in den Figuren 3 und 4 dargestellt sind. Hier taucht der Permanentmagnet als Sekundärteil 10 am Kettenglied 5 zwischen zwei Joche 9.1 oder Jochabschnitte der Primärteile 9 des Linearantriebs ein. Aufgrund der spiegelsymmetrischen Anordnung relativ zur vertikalen Längsmitte des Kettengliedes 5 kompensieren sich die auf die beiden Breitseiten des Sekundärteils 10 über den Luftstrom hinweg übertragenen orthogonalen Kräfte. Gleiches ist auch bei der Ausführungsform nach Figur 4 der Fall, hier sind die beiden Joche 9.1 des feststehenden Primärteils 9 durch ein im Querschnitt U-förmiges Jochprofil gebildet.

Die Primärteile 9 des Linearantriebs können so gestromt werden, daß in Nachbarbereichen unterschiedliche Vorschubkräfte auf die Kette 1 übertragen werden. Dadurch ist es möglich, in einem kritischen Bereich der Kette 1 eine Beruhigung des Kettenlaufs dadurch zu erzielen, daß der diesen Bereich durchlaufende Kettenabschnitt entweder gestrafft oder gestaucht wird. Die Straffung des Kettenabschnittes erreicht man, indem in einem in Vorschubrichtung vornliegenden ersten Bereich höhere Vorschubkräfte auf die Kette 1 übertragen werden als in einem dahinter entgegen der Vorschubrichtung liegenden Bereich. So wirken die Primärteile 9 in diesem hinteren Bereich sozusagen als Bremse für die Kette 1, im Extremfall können sie sogar entgegen der Vorschubrichtung wirkende Förderkräfte auf die Kette 1 übertragen.

## Patentansprüche

1. Werkstücktransportvorrichtung für eine im schnellen Durchlauf arbeitende Holzbearbeitungsmaschine mit zumindest einer endlosen, umlaufenden Kette (1), deren Obertrum (3) und Untertrum (4) sich zwischen zwei Umlenkvorrichtungen (2) erstrecken und deren Kettenglieder (5) mit Laufrollen (6) sowie mit Tragplatten (12) zur Auflage der Werkstücke versehen sind, ferner mit an der Kettenumlaufbahn angeordneten Führungsvorrichtungen (7) mit zumindest einer das Obertrum (3) der Ketten (1) unterstützenden Laufschiene (8) für die Laufrollen (6) der Kettenglieder (5) und mit einem Umlaufantrieb für die Kette (1),
**dadurch gekennzeichnet,**
**daß** der Umlaufantrieb als Linearantrieb entsprechend einem elektromagnetischen Linearmotor ausgeführt ist, wozu entlang wenigstens von Abschnitten der Kettenumlaufbahn und an zumindest aus einer Folge von Kettengliedern (5) gebildeten Abschnitten der Kette (1) die über ein magnetisches Wanderfeld relativ zueinander beweglichen Primärteile (9) und Sekundärteile (10) des Linearantriebs angeordnet sind.

2. Werkstücktransportvorrichtung nach Anspruch 1,
**dadurch gekennzeichnet,**
**daß** die zur Erzeugung des magnetischen Wanderfeldes bestromten Primärteile (9) des Linearantriebs an der Kettenumlaufbahn angeordnet sind.

3. Werkstücktransportvorrichtung nach Anspruch 2,
**dadurch gekennzeichnet,**
**daß** die Primärteile (9) des Linearantriebs in Abständen voneinander entlang der Kettenumlaufbahn angeordnet sind.

4. Werkstücktransportvorrichtung nach Anspruch 2,
**dadurch gekennzeichnet,**
**daß** die Primärteile (9) des Linearantriebs entlang der Kettenumlaufbahn lückenlos aneinander anschlie-ßen.

5. Werkstücktransportvorrichtung nach einem der Ansprüche 1 - 4, **dadurch gekennzeichnet,**
**daß** jedes der Kettenglieder (5) mit einem Sekundärteil (10) des Linearantriebs versehen ist.

6. Werkstücktransportvorrichtung nach einem der Ansprüche 1 - 5, **dadurch gekennzeichnet,**
**daß** die Sekundärteile (10) des Linearantriebs als Permanentmagnete ausgeführt sind.

7. Werkstücktransportvorrichtung nach Anspruch 5 oder 6,
**dadurch gekennzeichnet,**
**daß** die an der Kettenumlaufbahn angeordneten Primärteile (9) des Linearantriebs in der Bewegungsrichtung der Kettenglieder (5) sich erstreckende, mit Abstand einander gegenüber angeordnete Joche (9.1) haben, zwischen die die Sekundärteile (10) der Kettenglieder (5) eintauchen.

8. Werkstücktransportvorrichtung nach Anspruch 7,
**dadurch gekennzeichnet,**
**daß** die Sekundärteile (10) des Linearantriebs symmetrisch zu der in der Bewegungsrichtung sich erstreckenden, vertikalen Längsmittenebene der Kettenglieder (5) angeordnet sind.

9. Werkstücktransportvorrichtung nach einem der Ansprüche 1 - 8, **dadurch gekennzeichnet,**
**daß** die Primärteile (9) des Linearantriebs in Teilbereichen der Kettenumlaufbahn unterschiedliche magnetische Wanderfelder mit derart unterschiedlichen Vorschubkräften erzeugen, daß in diesen Teilbereichen der Kettenumlaufbahn eine Straffung der Kette (1) erfolgt.
